# EUROPEAN PATENT APPLICATION

(11) **EP 4 149 076 A1**
(43) Date of publication of application: **15.03.2023**
(21) Application number: 21196007.5
(22) Date of filing: 10.09.2021
(51) Int. Cl.: H04L 41/0677, H04L 12/28, H04L 41/0631, H04N 21/61, H04N 21/24

(54) **IDENTIFICATION OF A DEVICE BEHIND WHICH AN IMPAIRMENT OF A NETWORK IS CAUSED**

(71) Applicant: Vodafone GmbH, 40549 Düsseldorf (DE)
(72) Inventor: Fayyaz, Muneeb, 53225 Bonn (DE); Bossems, Christoph, 58454 Witten (DE); Hellweg, Patrick, 53947 Nettersheim (DE)
(74) Representative: Weisbrodt, Bernd

(57) **Abstract**

The present invention provides a method for identifying a device behind which an impairment of a network (1) is caused, comprising: transmitting (S2) a switch-off signal from a control device (2) to a switching device (3), wherein the switching device (3) is connected upstream a house amplifier device (4b) behind which an impairment of the network is suspected to be caused; determining (S4), by the control device (2), whether the impairment of the network (1) still exists; in case the impairment of the network (1) does not exist anymore, identifying (S5a) the house amplifier device (4b) as the device behind which the impairment of the network (1) is caused; in case the impairment of the network (1) still exists, identifying (S5b) the house amplifier device (4b) as a device which the impairment of the network (1) is not caused; and transmitting (S6) a switch-on signal from the control device (2) to the switching device (3).

## Description

The present application proposes a method and a system for identifying a device behind which an impairment of a network is caused. Furthermore, a corresponding control device and a corresponding switching device are proposed.

At present, finding the source of bad internet or complete outage of internet in cable networks is quite difficult. This is the case because a cable network works on coaxial cables that are notorious for being easy to break, crack and fragile. These cables are hidden underground usually outside and hence, quite safe. However, in customers' houses, said cables are exposed and - when connected to modems and splitters -most vulnerable. A simple loose connection in a customer's house or a dog bite can cause a huge problem in the cable network until the hub/fibre node. In private houses, about 90% of reported issues are caused by this factor.

The prior art provides several tools that allow to detect on street level that a certain street is causing a semi or full network outage. However, a street usually comprises hundreds of households and, according to current approaches, a technical expert must go from door to door in order to investigate the issue for the outage manually. Besides the fact that the technician might meet unhappy residents or might even miss residents, the technician has to perform a lot of trips to solve the issue. Further, it might be even the case that the issue is considered solved but due to lack of a proper localization of the issue, issues tend to repeat and such increases time to resolve the same, thus decreasing customer satisfaction.

In view of this, the technical problem can be seen to be that of providing a solution that allows to faster pin-point a troublemaker house without requiring troublesome field work for a technician. The solution should be simple, low-cost, and reliable.

In order to solve this problem, a method for identifying a device behind which an impairment of a network is caused is proposed, the method comprising: transmitting a switch-off signal from a control device to a switching device, wherein the switching device is connected upstream a house amplifier device behind which an impairment of the network is suspected to be caused; determining, by the control device, whether the impairment of the network still exists; in case the impairment of the network does not exist anymore, identifying the house amplifier device as the device behind which the impairment of the network is caused; in case the impairment of the network still exists, identifying the house amplifier device as a device which the impairment of the network is not caused; and transmitting a switch-on signal from the control device to the switching device.

With this approach, it is possible to easily localize a house causing network issues. Although an issue ultimately has to be still solved by a technician on-site, it is not required anymore for the technician to go from house to house since the switching device serves as a fixed part of the network. On the contrary, solutions known from the prior art such as analyzing modem pings, analyzing ticket histories or using artificial intelligence (AI) cannot reach an accurate solution since it is not possible to account for unpredictable things that may happen in households. For example, children playing and damaging network elements cannot be predicted because the AI solutions do not have daily intricate information and/or data about the customers' behaviour. These types of issues are not recognizable via modem pings either because once the issue appears, the modems are already compromised because of Return Path Impairment (RPI) or a full outage is causing loss of connection.

However, the proposed solution may work with a GSM network and thus may be completely detached from the cable network itself and hence, even if a relevant part of the cable network is down, the switching device can still be reached. Moreover, in places with poor GSM network coverage at the installation site of the switching device, e.g. in basements, it is possible to simply attach an external antenna to the switching device to increase GSM network coverage. Since the switching device is only controlled with two different commands, said device does not need a constant connection and does not generate network traffic like other devices that work e.g. on 3G, 4G, or 5G communication networks, which require constant connection and - at times - also a restart.

According to an aspect, the network is at least a part of a cable network providing at least one of a telephone service, an internet service, and a television service. According to another aspect, the method comprises identifying a street amplifier device suffering from a partial or complete outage, wherein the house amplifier device is connected to the street amplifier device. This is particularly advantageous since transmitting the switch-off signal can be subsequently transmitted only to house amplifier devices that belong to houses of a street or area, for which an issue has been encountered.

According to yet another aspect, at least one of the switch-off signal and the switch-on signal is transmitted using a Short Message Service (SMS). This has the advantage that the established 2G/GSM communication standard can be used, which will not be discounted in the foreseeable future.

Moreover, the method may further comprise identifying, by the switching device, whether the control device is permitted to transmit at least one of the switch-off signal and the switch-on signal by checking a caller identification and/or a security code comprised in the respective signal. This increases overall security because other devices are hindered from controlling the switching device.

According to another aspect of the present invention it is suggested to use a pool testing approach, especially in case there is a huge number of possible houses on a street level with one or more of them being the house causing outage, whereby a switch-off signal is sent to a set of houses simultaneously, e.g. 60 houses simultaneously, and whereby it is checked whether the impairment of the network vanishes/disappears. If this is the case, one or more house of these set of houses causes the impairment and is identified as a target for further analysis. Otherwise, a switch-off signal is sent to another set of houses and the same determination is performed. Hence, it is possible to decrease the number of targets from e.g. 120 to 60 in a couple of minutes. After this, the number of potential houses can be reduced e.g. from 60 to 30 in the same manner and the step can be repeated likewise. Thus, in e.g. three more minutes, the number of houses can be brought down to 15 and 7 respectively. This approach is even faster than sending a switch-off signal to a plurality of houses sequentially. However, if e.g. only ten houses or less are connected to a street amplifier device 5, the sequential approach may be more advantageous.

According to another embodiment, a system for identifying a device behind which an impairment of a network is caused is provided, the system comprising: a control device configured to transmit a switch-off signal from a control device to a switching device, wherein the switching device is connected upstream a house amplifier device behind which an impairment of the network is suspected to be caused; determine whether the impairment of the network still exists; in case the impairment of the network does not exist anymore, identify the house amplifier device as the device behind which the impairment of the network is caused; in case the impairment of the network still exists, identify the house amplifier device as a device which the impairment of the network is not caused; transmit a switch-on signal from the control device to the switching device; and the switching device configured to receive the switch-off signal from the control device; receive the switch-on signal from the control device.

Advantageously, the network is a cable network providing at least one of a telephone service, an internet service, and a television service.

According to a preferred embodiment, the control device is further configured to identify a street amplifier device suffering from a partial or complete outage, wherein the house amplifier device is connected to the street amplifier device.

The control device may be further configured to transmit at least one of the switch-off signal and the switch-on signal using a Short Message Service (SMS).

According to another aspect, the switching device is further configured to identify whether the control device is permitted to transmit at least one of the switch-off signal and the switch-on signal by checking a caller identification and/or a security code comprised in the respective signal.

According to another embodiment, a control device for identifying a device behind which an impairment of a network is caused is provided, wherein the control device is configured to: transmit a switch-off signal from a control device to a switching device, wherein the switching device is connected upstream a house amplifier device behind which an impairment of the network is suspected to be caused; determine whether the impairment of the network still exists; in case the impairment of the network does not exist anymore, identify the house amplifier device as the device behind which the impairment of the network is caused; in case the impairment of the network still exists, identify the house amplifier device as a device which the impairment of the network is not caused; and transmit a switch-on signal from the control device to the switching device

The control device may be further configured to identify a street amplifier device suffering from a partial or complete outage, wherein the house amplifier device is connected to the street amplifier device.

According to another embodiment, a switching device, which is connected upstream a house amplifier device behind which an impairment of a network is suspected to be caused is provided, wherein the switching device is configured to receive a switch-off signal from a control device, and receive a switch-on signal from the control device.

The switching device may be further configured to identify that a power supply for the switching device is interrupted, and send, to the control device, a notification that the power supply is interrupted.

Advantageously, the switching device may be further configured to temporarily provide, from an energy storage of the switching device, particularly a condenser, power to enable the sending of the notification.

Further details, features and advantages of the invention are explained in more detail below with reference to the embodiments shown in the figures of the drawings.

Therein:
- Fig. 1: shows an abstraction of a cable network infrastructure;
- Fig. 2: shows a house in which a device behind which an impairment of a network is caused is located;
- Fig. 3: shows an embodiment of a method for identifying a device behind which an impairment of a network is caused; and
- Fig. 4: shows an embodiment of a system for identifying a device behind which an impairment of a network is caused.

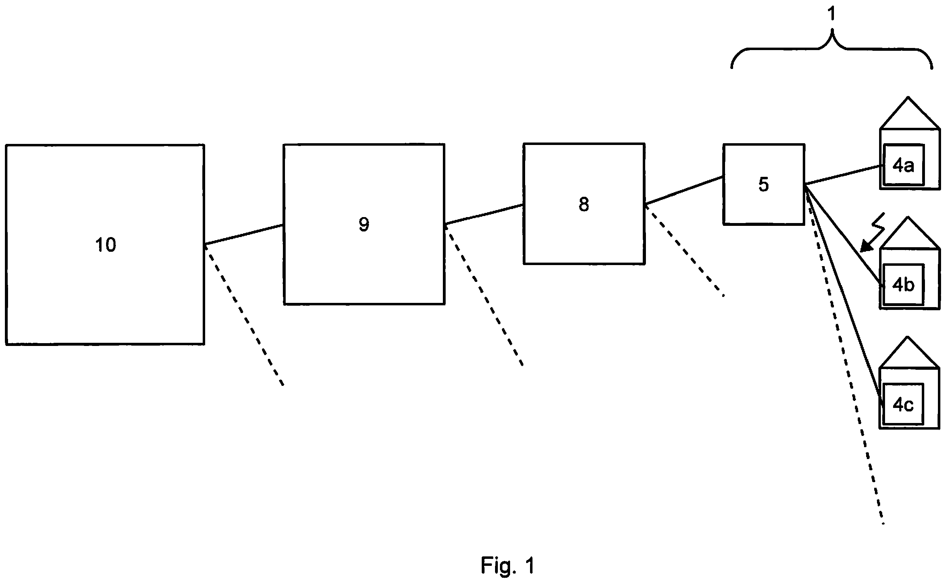

Fig. 1 shows a cable network infrastructure in an abstracted manner. A backbone network segment 10 is connected to at least one point of presence network segment 9. Likewise, said point of presence network segment 9 is connected to at least one fibre node/hub 8. Further, a connection from the fibre node/hub 8 is existing to at least one street amplifier device 5.

In case a semi or full network outage occurs caused by an issue that occurs downstream, i.e. behind, a house amplifier device 5, the network may be impacted until fibre node/hub 8 level. Hence, an impact does not only concern users of modems that are connected to an house amplifier 4b behind which an impairment occurs, but also users with modems behind other house amplifiers 4a, 4c.

Throughout the embodiments, a network 1 therefore refers to the part from a customer's modem level until fibre node/hub 8 level.

According to an embodiment, in case there is a huge number of possible houses, e.g. 120 houses, on a street level with one of them being the house causing outage, it is suggested to use a pool testing approach.

According to such an approach, a switch-off signal is sent to e.g. 60 houses simultaneously and it is checked whether the impairment of the network vanishes/disappears. If this is the case, one of these 60 houses causes the impairment and is identified as a target for further analysis. Otherwise, a switch-off signal is sent to the other 60 houses and the same determination is performed. Hence, it is possible to decrease the number of targets from 120 to 60 in a couple of minutes. After this, the number of potential houses can be reduced from 60 to 30 in the same manner and the step can be repeated likewise. Thus, in e.g. three more minutes, the number of houses can be brought down to 15 and 7 respectively.

This approach is even faster than sending a switch-off signal to a plurality of houses sequentially. However, if e.g. only ten houses or less are connected to a street amplifier device 5, the sequential approach may be more advantageous.

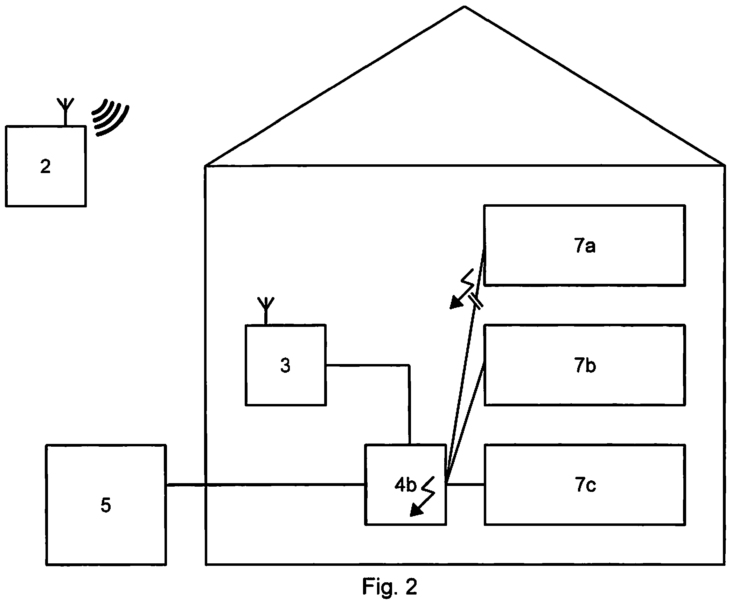

Fig. 2 shows a more detailed view of a house in which a device behind which an impairment of a network is caused is located. It is apparent from Fig. 2 that the house amplifier device 4b is located downstream street amplifier device 5.

Furthermore, said house amplifier device 4b serves to be connected to a plurality of modems 7a, 7b and 7c. However, in the embodiment of Fig. 2, the connection towards modem 7a is interrupted, for example due to a loose cable.

Furthermore, Fig. 2 discloses that a switching device 3 is connected upstream a house amplifier device 4b behind which an impairment of the network 1 is suspected to be caused.

Fig. 2 further shows a control device 2 for identifying a device behind which an impairment of a network 1 is caused. Said control device 2 has a wireless connection to the switching device 3 and may control the same by sending a switch-off signal and sending a switch-on signal to the same.

By sending the switch-off signal from the control device 2 to the switching device 3, it can be determined whether the impairment of the network 1 still exists. In detail, in case the impairment of the network 1 does still exist, the control device 2 identifies the house amplifier device 4b as the device behind which the impairment of the network 1 is not caused. However, in the present case, the impairment of the network 1 does not exist anymore and hence, the control device 2 identifies the house amplifier device 4b as the device behind which the impairment of the network 1 is caused.

After it has been successfully determined whether the impairment of the network 1 still exists, the control device 2 transmits a switch-on signal from the control device 2 to the switching device 3. Hence, modems 7b and 7c can continue to operate. Further, a technician can be sent out to fix the problem, wherein the technician knows that a device behind the house amplifier device 4b causes the problem.

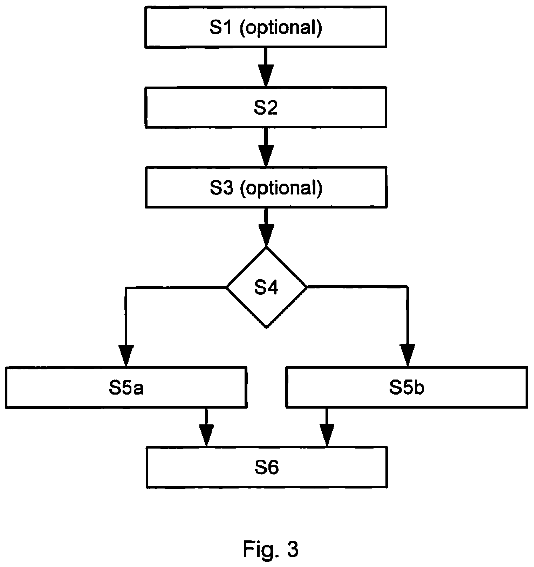

Fig. 3 shows an embodiment of a method for identifying a device behind which an impairment of a network is caused. In a first optional method step S1, a street amplifier device 5 suffering from a partial or complete outage may be identified, wherein the house amplifier device 4b is connected to the street amplifier device 5. Identification of the street amplifier device can be performed by means of conventional network monitoring software.

Subsequently, in method step S2, a switch-off signal is transmitted from the control device 2 to a switching device 3, wherein the switching device 3 is connected upstream a house amplifier device 4b behind which an impairment of the network 1 is suspected to be caused.

According to another optional method step S3, the switching device 3 identifies whether the control device 2 is permitted to transmit at least one of the switch-off signal and the switch-on signal by checking a caller identification and/or a security code comprised in the respective signal. Without a proper authorization, the switching device 3 will simply disregard the received command.

After that, the control device 2 is able to determine in step S4 whether the impairment of the network 1 still exists. This may be done by means of the conventional network monitoring software. In case the impairment of the network 1 does not exist anymore, the house amplifier device 4b is identified in step S5a as the device behind which the impairment of the network 1 is caused. Alternatively, in case the impairment of the network 1 still exists, the house amplifier device 4b is identified in step S5b as a device behind which the impairment of the network 1 is not caused.

Finally, the control device 2 transmits a switch-on signal from the control device 2 to the switching device 3 in step S6. If a house amplifier device is identified not to be the device behind which the impairment of the network 1 is caused, the above method steps are continued with further house amplifier devices, e.g. in the same street, until the "correct" house amplifier device is found. Since the overall process takes less than one minute per house amplifier device, it is possible to identify the cause of a problem quickly. For example, if a fibre node/hub 8 serves 120 houses/house amplifiers, a problem identification can be done in less than two hours.

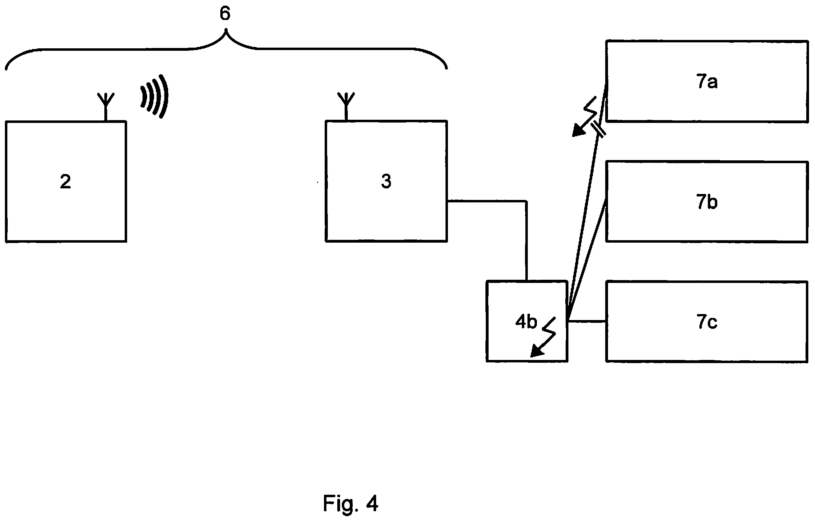

Fig. 4 shows an embodiment of a system 6 for identifying a device behind which an impairment of a network 1 is caused.

The system 6 comprises a control device 2 that is configured to transmit a switch-off signal to a switching device 3, wherein the switching device 3 is connected upstream a house amplifier device 4b behind which an impairment of the network 1 is suspected to be caused. In the present case, the switch-off signal is transmitted using a Short Message Service (SMS).

After the switch-off signal is received by the switching device 3, it turns of a power supply of the house amplifier device 4b. Prior to turning off the power supply, the switching device 3 may check whether the control device 2 is authorized to instruct the switching device 3 to do so, for example by checking a caller identification and/or a security code comprised in the respective signal.

The control device 2 is further configured to determine whether the impairment of the network still exists, wherein in case the impairment of the network 1 does not exist anymore, the control device 2 is configured to identify the house amplifier device 4b as the device behind which the impairment of the network 1 is caused and, in case the impairment of the network 1 still exists, the control device 2 is configured to identify the house amplifier device 4b as a device which the impairment of the network 1 is not caused.

After that, the control device 2 transmits a switch-on signal to the switching device 3, based upon which the switching device 3 turns on the power supply of the house amplifier device 4b again.

The embodiments shown in the figures of the drawing and the embodiments explained in connection therewith serve only to explain the invention and are not limiting for the same.

### Reference signs:

- 1: Network
- 2: Control device
- 3: Switching device
- 4a-4c: House amplifier device
- 5: Street amplifier device
- 6: System
- 7a-7c: Modem
- 8: Fibre node/hub
- 9: Point of presence
- 10: Backbone
- S1: Method step
- S2: Method step
- S3: Method step
- S4: Method step
- S5a: Method step
- S5b: Method step
- S6: Method step

## Claims

1. A method for identifying a device behind which an impairment of a network (1) is caused, comprising:
transmitting (S2) a switch-off signal from a control device (2) to a switching device (3), wherein the switching device (3) is connected upstream a house amplifier device (4b) behind which an impairment of the network (1) is suspected to be caused;
determining (S4), by the control device (2), whether the impairment of the network (1) still exists;
in case the impairment of the network (1) does not exist anymore, identifying (S5a) the house amplifier device (4b) as the device behind which the impairment of the network (1) is caused;
in case the impairment of the network (1) still exists, identifying (S5b) the house amplifier device (4b) as a device behind which the impairment of the network (1) is not caused; and
transmitting (S6) a switch-on signal from the control device (2) to the switching device (3).

2. The method of claim 1, wherein the network (1) is at least a part of a cable network providing at least one of a telephone service, an internet service, and a television service.

3. The method of claim 1 or claim 2, further comprising:
identifying (S1) a street amplifier device (5) suffering from a partial or
complete outage, wherein the house amplifier device (4b) is connected to the street amplifier device (5).

4. The method of any one of claims 1 to 3, wherein at least one of the switch-off signal and the switch-on signal is transmitted using a Short Message Service, SMS.

5. The method of any one of claims 1 to 4, further comprising:
identifying (S3), by the switching device (3), whether the control device is permitted to transmit at least one of the switch-off signal and the switch-on signal by checking a caller identification and/or a security code comprised in the respective signal.

6. A method according to any one of claims 1 to 5, wherein a switch-off signal is sent to a set of houses simultaneously and whereby it is checked whether the impairment of the network vanishes/disappears, whereby in the case the impairment of the network vanishes/disappears one or more houses of these set of houses causes the impairment and is identified as a target for further analysis, otherwise, a switch-off signal is sent to another set of houses and the same determination is performed.

7. A system (6) for identifying a device behind which an impairment of a network (1) is caused, comprising:
a control device (2) configured to
transmit (S2) a switch-off signal from a control device (2) to a switching device (3), wherein the switching device (3) is connected upstream a house amplifier device (4b) behind which an impairment of the network (1) is suspected to be caused;
determine (S4) whether the impairment of the network (1) still exists;
in case the impairment of the network (1) does not exist anymore, identify (S5a) the house amplifier device (4b) as the device behind which the impairment of the network (1) is caused;
in case the impairment of the network (1) still exists, identify (S5b) the house amplifier device (4b) as a device which the impairment of the network (1) is not caused;
transmit (S6) a switch-on signal from the control device (2) to the switching device (3); and
the switching device (3) configured to
receive (S2) the switch-off signal from the control device (2);
receive (S6) the switch-on signal from the control device (2).

8. The system (6) of claim 7, wherein the network (1) is a cable network providing at least one of a telephone service, an internet service, and a television service.

9. The system (6) of claim 7 or claim 8, wherein the control device (2) is further configured to:
identify (S1) a street amplifier device suffering from a partial or complete outage, wherein the house amplifier device behind which an impairment of the network (1) is suspected to be caused building is connected to the street amplifier device.

10. The system (6) of any one of claims 7 to 9, wherein the control device (2) is configured to transmit at least one of the switch-off signal and the switch-on signal using a Short Message Service, SMS.

11. The system (6) of any one of claims 7 to 10, wherein the switching device (3) is further configured to:
identify (S3) whether the control device (2) is permitted to transmit at least one of the switch-off signal and the switch-on signal by checking a caller identification and/or a security code comprised in the respective signal.

12. A control device (2) for identifying a device behind which an impairment of a network (1) is caused configured to:
transmit a switch-off signal from a control device (2) to a switching device (3), wherein the switching device (3) is connected upstream a house amplifier device (4b) behind which an impairment of the network (1) is suspected to be caused;
determine whether the impairment of the network (1) still exists;
in case the impairment of the network (1) does not exist anymore, identify the house amplifier device (4b) as the device behind which the impairment of the network (1) is caused;
in case the impairment of the network (1) still exists, identify the house amplifier device (4b) as a device which the impairment of the network (1) is not caused; and
transmit a switch-on signal from the control device (2) to the switching device (3).

13. The control device (2) of claim 12, further configured to:
identify a street amplifier device suffering from a partial or complete outage,
wherein the house amplifier device (4b) is connected to the street amplifier device.

14. A switching device (3), which is connected upstream a house amplifier device (4b) behind which an impairment of the network (1) is suspected to be caused, configured to:
receive a switch-off signal from a control device (2); and
receive a switch-on signal from the control device (2).

15. The switching device (3) of claim 14, further configured to:
identify that a power supply for the switching device (3) is interrupted; and
send, to the control device (2), a notification that the power supply is interrupted.

16. The switching device (3) of claim 15, further configured to:
temporarily provide, from an energy storage of the switching device (3),
particularly a condenser, power to enable the sending of the notification.
